# EUROPEAN PATENT SPECIFICATION

(11) **EP 1 545 865 B1**
(45) Date of publication and mention of the grant of the patent: **02.01.2008**
(21) Application number: 03754971.4
(22) Date of filing: 29.09.2003
(51) Int. Cl.: B29D 11/00, B29C 33/40, B29C 33/44

(54) **METHOD AND USE OF AN APARATUS FOR DRY RELEASING LENSES FROM AN ANTERIOR MOLD HALF**
VERFAHREN UND VERWENDUNG EINER VORRICHTUNG ZUR TROCKEN-ENTFORMUNG VON LINSEN AUS EINER VORDEREN WERKZEUGHÄLFTE
PROCEDE ET UTILISATION D'UN APPAREIL DE DEMOULAGE A SEC DE LENTILLES D'UN DEMI-MOULE ANTERIEUR

(30) Priority: 30.09.2002 US 261291
(43) Date of publication of application: 29.06.2005
(73) Proprietor: BAUSCH & LOMB INCORPORATED, Rochester, New York 14604 (US)
(72) Inventor: CARDIFF, John, Tramore, Waterford (IE); NATALIE, Thomas, F., Rochester, NY 14626 (US); SMITH, David, L., Rochester, NY 14622 (US); SEYBOTH, William, J., Rochester, NY 14626 (US)
(74) Representative: Bowman, Paul Alan
(86) International application number: PCT/US2003/030678
(87) International publication number: WO 2004/030898

(56) References cited:
- WO-A-01/74574
- WO-A-98/19854
- WO-A-98/57788
- US-A1- 2002 027 303
- PATENT ABSTRACTS OF JAPAN vol. 2000, no. 11, 3 January 2001 (2001-01-03) & JP 2000 210951 A (SEIKO EPSON CORP), 2 August 2000 (2000-08-02)
- PATENT ABSTRACTS OF JAPAN vol. 016, no. 278 (M-1268), 22 June 1992 (1992-06-22) & JP 04 069217 A (HITACHI LTD), 4 March 1992 (1992-03-04)

## Description

### Backgound Of The Invention

The present invention relates to molding of articles of manufacture, and more particularly relates to methods and apparatus for releasing a molded lens from a mold surface. The present invention has particular application to the production of molded ophthalmic lenses such as contact lenses and intraocular lenses.

Static cast molding of contact lenses is known, see, for example, U.S. Patent No. 5,466,147 issued to Bausch & Lomb Incorporated. A single mold unit for making a single lens comprises a female mold section having a concave optical surface and a male mold section having a convex optical surface. The female and male mold sections are complimentary shaped and are brought together to form a lens-molding cavity between the facing concave and convex optical surfaces of the female and male mold sections, respectively.

Although less popular than full cast molding, forming lenses by spin-casting is also known where lens material is deposited into a female mold section and spun to form the anterior surface of the lens. The posterior surface is then formed by a lathe cutting operation. In this method of lens manufacture, excess material may also form on the female mold section with may require removal prior to lens release from the mold.

The basic process for cast molding a lens is as follows. A quantity of liquid lens material is dispensed into the concave optical surface of the female mold section and the male mold section is seated upon the female mold section with the concave and convex surfaces thereof facing one another to form a lens-shaped mold cavity. The joined female and male mold sections form a single mold unit which is subject to a curing cycle (e.g., by thermal or UV radiation) thereby causing polymerization of the lens material in the mold cavity. Once the lens material has cured, the male and female mold sections must be separated to retrieve the cured lens.

The opening or release of the mold sections must be carried out in a manner which will not harm the delicate lens. Once the lens has polymerized in the mold cavity, the lens and any excess lens material will have an adhesive bond to the opposite concave and convex mold surfaces. Thus, the release of the male mold section from the female mold section must be of a force strong enough to break the adhesive bond of the lens and excess lens material to the opposing mold surfaces, yet not so forceful or haphazard that the optical surfaces of the lens are harmed by the release process. Should the lens crack or be otherwise damaged during the mold release process, the lens must be scrapped, thereby lowering the output yield and increasing manufacturing costs.

Once the mold sections have been separated, the lens will adhere to one of the mold surfaces and must therefore be released from the mold section on which it is retained. Both wet and dry release methods of lens release have been proposed in the prior art. In wet lens release methods, an aqueous solution is used to wet the hydrophilic lens which absorbs water and swells, causing the lens to separate from the mold surface. In dry release methods, the lens is removed from the associated mold surface while still in the dry state. The adhesive bond between the lens and mold surface is broken, usually by application of a force to the mold body, for example by squeezing or pressing against the non-optical surface of the mold to move the mold surface relative to the rigid lens. Once the adhesive bond has been broken, the lens is retrieved, for example by a vacuum picking tool. When releasing a lens from its associated mold in the dry state, the lens will necessarily absorb some of the force used against the mold to release the lens therefrom. Thus, as with the previous step of releasing the male mold section from the female mold section, the force used to release the lens from the mold must be of a force strong enough to break the adhesive bond of the lens and the opposing mold surface, yet not so forceful or haphazard that the optical surfaces of the lens are harmed by the release process. Should the lens crack or be otherwise damaged during the lens release process, the lens must be scrapped, thereby lowering the output yield and increasing manufacturing costs.

In general, dry releasing a lens from the associated mold part is preferred over wet release methods. This is because the lens is much easier to handle when in the dry state as opposed to the wet state. In the dry state, it is easy to pick the lens with a vacuum picking head and move the lens from one process station to another. As stated above, past dry lens release methods include applying a force to the non-optical surface of the mold part (the surface opposite the optical surface to which the lens is adhered). While this method is satisfactory in certain mold part-lens combinations of materials and designs, it has proven unsatisfactory in instances where, for example, the mold part is formed of a relatively rigid material which makes it harder to deform the mold part relative to the lens to which it is adhered without harming the lens in the process. This situation is particularly acute when the lens is a toric lens which includes hash marks in the lens surface which tend to adhere to the mold part more strongly than the surrounding smooth surface of the lens. Releasing a lens of this type in the dry state can cause cracking particularly adjacent the toric markings of the lens. There therefore remains a need in the art for an improved method of releasing a lens from its associated mold part while in the dry state.

WO01/74574 discloses a method fro dry releasing the anterior, convex surface of a lens having a centre and a peripheral edge from an anterior mold in which the lens has been molded, the anterior mold having a convex optical surface and to which the anterior surface of the lens is adhered following the molding operation, the anterior mold part further comprising a convex non-optical surface located opposite the optical surface, each of said optical and non-optical surfaces having a centre and a peripheral edge, said method comprising the step of applying a first force against the non-optical surface of said anterior mold part in a location which is substantially at the centre of the mold surface, said force being sufficient to release the lens from the anterior mold part.

### Summary Of The Invention

The present invention addresses the problems associated with the dry release of a lens from its associated mold part by providing an apparatus and method which releases the dry lens from its associated mold part without causing harm to the lens. The invention is particularly adapted to the manufacture of contact and intraocular lenses which are molded in a mold having a female mold part to which the lens preferentially adheres following the lens curing operation.

In a first aspect, the invention provides a method for dry releasing the anterior, convex surface of a lens having a center and a peripheral edge from an anterior mold part in which the lens has been molded, the anterior mold part having a concave optical surface to which the anterior surface of the lens is adhered following the molding operation. The anterior mold part also includes a convex, non-optical surface located opposite the concave optical surface, with each of the optical and non-optical surfaces having a center and a peripheral edge. The method comprises the step of applying a first force against the non-optical surface of the anterior mold part at a location radially outwardly of the non-optical surface center, the first force being sufficient to release at least the peripheral edge of the lens from the anterior mold part. At this point, it is possible that the entire lens will release from the mold part, however, it is more likely that the center of the lens will still remain adhered to the mold part. In this case, a second force is applied against the non-optical surface of the anterior mold part at a location adjacent the center of the non-optical surface center, this second force being sufficient to release the center of the lens from the anterior mold part whereby the lens is free to be picked from the anterior mold part for further handling (e.g., inspection, hydration, sterilization and packaging).

Apparatus to carry out the method is provided comprising a mold release sleeve having an annular mold-engaging surface defining a central opening, the annular mold-engaging surface applying a first force against the non-optical surface of the mold part at a location radially outwardly of the center of the non-optical surface, the first force being sufficient to release at least the peripheral edge of the anterior surface of the lens from the concave optical surface of the anterior mold part.

Should the lens not entirely release from the mold part, application of the second force is achieved through the use of a mold release pin, the mold release pin mounted for reciprocating, telescoping movement within the central opening of the mold release sleeve, the mold release pin applying a second force against the non-optical surface of the anterior mold part at a location adjacent the center of the non-optical surface center, the force being sufficient to release the center of the anterior surface of the lens from the anterior mold part whereby the lens is free to be picked from the anterior mold part for further handling.

### Brief Description of The Drawing

Figure 1 is a schematic, exploded view of a representative mold assembly for use with the invention;
Figure 2 is a schematic, cross-sectional view of the assembled mold assembly of Fig. 1; and
Figure 3 is a fragmented, schematic, cross-sectional view of the anterior mold part of the mold assembly and a lens adhered thereto immediately following removal of the posterior mold part and prior to release of the lens. The anterior mold part and lens are mounted to a preferred embodiment of the inventive apparatus which may be used for carrying out the inventive method for releasing of the lens from the mold part.

### Detailed Description Of Preferred Embodiments

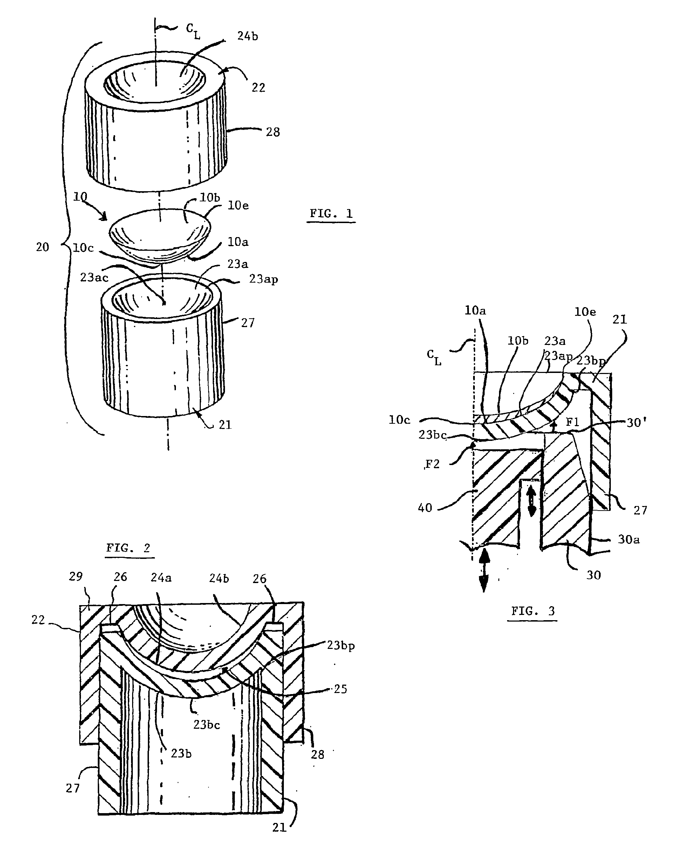

Referring now to the drawing, Figs. 1 and 2 schematically illustrate a representative mold assembly for use in the method and apparatus of the present invention. Mold assembly 20 includes anterior mold section 21 and posterior mold section 22. Upon assembling anterior and posterior mold sections 21, 22, a mold cavity 25 is defined therebetween. The anterior mold section 21 includes a concave optical surface 23a which forms the convex, anterior surface 10a of the molded lens 10 (the surface which faces away from the eye). Anterior mold section 21 further includes a convex, non-optical surface 23b located opposite optical surface 23a. The posterior mold section 22 includes a convex optical surface 24a which forms the concave, posterior surface 10b of the molded lens 10 (the surface which contacts the eye). Posterior mold section 22 further includes a concave, non-optical surface 24b located opposite optical surface 24a. Mold parts 21, 22 further include respective cylindrical walls 27, 28 that nest when the mold parts are fully assembled as seen in Fig. 2.

According to conventional cast molding methods, mold parts 21, 22 are first injection molded from a plastic resin in an injection molding apparatus. A curable lens material, such as a liquid polymerizable monomer mixture, is introduced into anterior molding surface 23a, mold parts 21 and 22 are brought into close association with the liquid being compressed to fill molding cavity 25, and the monomer mixture is cured into a contact lens 10. Frequently, a reservoir is provided for receiving excess lens material when the mold sections are brought together. For the illustrated mold assembly, reservoir 26 receives excess lens material; when the lens is cured, the excess lens material also cures to form a ring-like shape.

As discussed above, following casting of the lens, the mold assembly consisting of the posterior and anterior mold parts must be disassembled (termed "decapping" in the art) to access the lens. With regard to the present invention, upon decapping the posterior mold part 22 from the anterior mold part 21, it is assumed the lens 10 will remain adhered to the anterior mold part 21. Apparatus for releasing the anterior surface 10a of lens 10 from concave surface 23a of the anterior mold part 21 will now be described.

Lens 10 has a center 10c lying along center line C_{L} of Fig. 1 and a peripheral edge 10e, both of which generally align with the centers and peripheral edges 23ac, 23ap of optical surface 23a, and 23bc, 23bp of the non-optical surface 23b, of the anterior mold part 21 in which lens 10 has been molded.

Referring to Fig. 3, the anterior mold part 21 with lens 10 still adhered thereto is shown mounted on the lens release apparatus of the present invention in the intended manner. It is noted that the view of Fig. 3 is one half of the apparatus and mold part, the taken through the longitudinal center thereof, the other half being a mirror image. More particularly, the apparatus includes a cylindrical mold release sleeve 30 having an annular mold-engaging surface 30' which lies in a plane substantially perpendicular to center line C_{L}, and defines a longitudinal sleeve opening 32. The anterior mold part 21 is mounted upon sleeve 30 with the wall portion 27 thereof telescoping over the outer wall surface 30a of sleeve 30. In this regard, it is noted that the outer diameter of the sleeve 30 and the diameter of the inside surface of mold wall 27 may be made very close such that mold part 21 slides in closely mating relation over sleeve 30 and becomes centrally aligned therewith. As described above, the present invention releases the lens from the mold part firstly along the peripheral edge 10e of the lens, followed by release of the center 10c of the lens. This is accomplished with the annular mold-engaging surface 30' being moved along center line C_{L} relative to lens 10 to apply a first force F1 against the non-optical surface 23b of anterior mold part 21 at a location radially outwardly of the center 23bc thereof. This first force F1 is sufficient to release at least the peripheral edge 10e of the lens from the concave optical surface 23 a of the anterior mold part 21.

A mold release pin 40 is provided and mounted for reciprocating, telescoping movement within the longitudinal opening 32 of the mold release sleeve 30, the mold release pin applying a sequential second force F2 against the non-optical surface of the anterior mold part at a location adjacent the center 23bc thereof. The second force F2 is sufficient to release the center 10c of the anterior surface of the lens from the anterior mold part 21 whereby the lens is free to be picked from the anterior mold part for further handling. The release of lens 10 is thus carried out in a manner which will not crack or harm the lens during the release process.

It is noted that the relative, longitudinal movements of mold release sleeve 30 and mold pin 40 with regard to mold part 21 is not shown but may be carried out in any manner known to those skilled in the mechanical arts. For example, mold release sleeve 30 and pin 40 may each be mounted to their own linear slide to effectuate alternate, reciprocal movement of the sleeve 30 and pin 40 along center line C_{L}.

## Claims

1. A method for dry releasing the anterior, convex surface of a lens (10) having a center (10c) and a peripheral edge (10e) from an anterior mold (21) part in which the lens has been molded, the anterior mold part having a concave optical surface (23a) and to which the anterior surface (10a) of the lens is adhered following the molding operation, said anterior mold part further including a convex non-optical surface (23b) located opposite the optical surface, each of said optical and non-optical surfaces having a center (C_{L}) and a peripheral edge, said method comprising the step of:
applying a first force against said non-optical surface (23b) of said anterior mold part at a location radially outwardly of said non-optical surface center, said first force being sufficient to release at least the peripheral edge of the lens from the anterior mold part.

2. The method of claim1, and further comprising, following step (a), the step of:
applying a second force against said non-optical surface of said anterior mold part at a location adjacent the center of said non-optical surface center, said force being sufficient to release the center of the lens from the anterior mold part whereby the lens is free to be picked from the anterior mold part for further handling.

3. The method of claim 2, wherein said first force is applied with a mold release sleeve (30) having an annular mold-engaging surface (30') defining a central opening (32).

4. The method of claim 2, wherein said second force is applied with a mold release pin (40), said mold release pin mounted for reciprocating, telescoping movement within said central opening (32) of said mold release sleeve.

5. A method as claimed in any preceing claim in which, the anterior mold part further includes a wall extending from the peripheral edge, said wall having inner and outer surfaces, and said first force is applied against the inner surface of said wall of said anterior mold part.

6. Use of an apparatus in the method of claim 1 said apparatus comprising:
a mold release sleeve (30) having an annular mold-engaging surface (30') defining a central opening (32), said annular mold-engaging surface being capable of applying a first force against said non-optical surface of said mold part at a location radially outwardly of said center of said non-optical surface, said first force being sufficient to release at least the peripheral edge of the anterior surface of the lens from the concave optical surface of the anterior mold part.

7. The use of claim 6, said apparatus further comprising:
a mold release pin, said mold release pin mounted for reciprocating, telescoping movement within said central opening of said mold release sleeve, said mold release pin being capable of applying a second force against said non-optical surface of said anterior mold part at a location adjacent the center of said non-optical surface center, said force being sufficient to release the center of the anterior surface of said lens from the anterior mold part whereby the lens is free to be picked from the anterior mold part for further handling.

## Patentansprüche

1. Ein Verfahren zur Trocken-Entformung der vorderen, konvexen Oberfläche einer Linse (10), die ein Zentrum (10c) und eine periphere Kante (10e) aufweist, aus einem vorderen Formelement (21), in dem die Linse geformt wurde, wobei das vordere Formelement eine konkave optische Oberfläche (23a) aufweist und an die die vordere Oberfläche (10a) der Linse nach dem Formverfahren anhaftet, wobei besagtes vorderes Formelement weiter eine konvexe nicht-optische Oberfläche (23b) beinhaltet, die auf der gegenüberliegenden Seite der optischen Oberfläche angeordnet ist, wobei jede der besagten optischen und nicht-optischen Oberflächen ein Zentrum (C_{L}) und eine periphere Kante aufweisen, wobei besagtes Verfahren den Schritt umfasst:
Anwenden einer ersten Kraft gegen besagte nicht-optische Oberfläche (23b) des besagten vorderen Formelements an einer äußeren radialen Stelle des besagten nicht-optischen Oberflächenzentrums, wobei besagte erste Kraft ausreicht, um mindestens die periphere Kante der Linse aus dem vorderen Formelement zu entformen.

2. Das Verfahren nach Anspruch 1, und das weiter, dem Schritt (a) folgend, den Schritt umfasst:
Anwenden einer zweiten Kraft gegen besagte nicht-optische Oberfläche von besagtem vorderen Formelement an einer Stelle die an das Zentrum von besagtem nicht-optischen Oberflächenzentrum angrenzt, wobei besagte Kraft ausreicht, um das Zentrum der Linse aus dem vorderen Formelement zu entformen, wobei die Linse frei ist, um aus dem vorderen Formelement für die weitere Handhabung abgenommen zu werden.

3. Das Verfahren nach Anspruch 2, wobei besagte erste Kraft mit einer Formausdrückmuffe (30) angewendet wird, die eine ringförmige form-einnehmende Oberfläche (30') aufweist, die eine zentrale Öffnung (32) festlegt.

4. Das Verfahren nach Anspruch 2, wobei besagte zweite Kraft mit einem Formauslösestift (40) angewendet wird, wobei besagter Formauslösestift für Kolben-, Teleskopbewegung innerhalb besagter zentralen Öffnung (32) von besagter Formausdrückmuffe angebracht ist.

5. Ein Verfahren, wie in einem der vorstehenden Ansprüchen beansprucht, wobei das vordere Formelement weiter eine Wand beinhaltet, die von der peripheren Kante aus verlängert ist, worin besagte Wand innere und äußere Oberflächen aufweist und besagte erste Kraft gegen die innere Oberfläche besagter Wand von besagtem vorderen Formelement angewendet wird.

6. Verwendung einer Vorrichtung in dem Verfahren nach Anspruch 1, wobei besagte Vorrichtung umfasst:
Eine Formausdrückmuffe (30), die eine ringförmige form-einnehmende Oberfläche (30') aufweist, die eine zentrale Öffnung (32) festlegt, wobei besagte ringförmige form-einnehmende Oberfläche geeignet ist eine erste Kraft gegen besagte nicht-optische Oberfläche von besagtem Formelement, an einer radialen äußeren Stelle von besagtem Zentrum von besagter nicht-optischer Oberfläche aufzubringen, wobei besagte erste Kraft ausreicht, um mindestens die periphere Kante der vorderen Oberfläche der Linse aus der konkaven optischen Oberfläche des vorderen Formteils zu entformen.

7. Die Verwendung nach Anspruch 6, wobei besagte Vorrichtung weiter umfasst:
Ein Formauslösestift, wobei besagter Formauslösestift für Kolben-, Teleskopbewegung innerhalb besagter zentralen Öffnung von besagter Formausdrückmuffe angebracht ist, wobei besagter Formauslösestift geeignet ist eine zweite Kraft gegen besagte nicht-optische Oberfläche von besagtem vorderen Formelement an einer angrenzenden Stelle des Zentrums von besagtem nicht-optischen Oberflächenzentrum aufzubringen, wobei besagte Kraft ausreicht, das Zentrum der vorderen Oberfläche besagter Linse aus dem vorderen Formelement zu entformen, wodurch die Linse frei ist um aus dem vorderen Formelement für die weitere Handhabung abgenommen zu werden.

## Revendications

1. Procédé de démoulage à sec de la surface convexe, antérieure d'une lentille (10) ayant un centre (10c) et un bord périphérique (10e), d'une partie de moule (21) antérieure dans laquelle la lentille a été moulée, la partie de moule antérieure ayant une surface optique concave (23a) et à laquelle la surface antérieure (10a) de la lentille est collée à la suite de l'opération de moulage, ladite partie de moule antérieure comportant en outre une surface non optique convexe (23b) située à l'opposé de la surface optique, chacune parmi lesdites surfaces optique et non optique ayant un centre (C_{L}) et un bord périphérique, ledit procédé comprenant l'étape consistant à :
appliquer une première force contre ladite surface non optique (23b) de ladite partie de moule antérieure au niveau d'un emplacement radialement vers l'extérieur dudit centre de surface non optique, ladite première force étant suffisante pour démouler au moins le bord périphérique de la lentille depuis la partie de moule antérieure.

2. Procédé selon la revendication 1, comprenant en outre, à la suite de l'étape (a), l'étape consistant à :
appliquer une seconde force contre ladite surface non optique de ladite partie de moule antérieure au niveau d'un emplacement adjacent au centre dudit centre de surface non optique, ladite force étant suffisante pour démouler le centre de la lentille de la partie de moule antérieure, moyennant quoi il est possible de récupérer la lentille depuis la partie de moule antérieure pour une autre manipulation.

3. Procédé selon la revendication 2, dans lequel ladite première force est appliquée à l'aide d'un manchon (30) de démoulage de moule ayant une surface (30') de mise en prise de moule annulaire définissant une ouverture centrale (32).

4. Procédé selon la revendication 2, dans lequel ladite seconde force est appliquée à l'aide d'une goupille (40) de démoulage de moule, ladite goupille de démoulage de moule montée pour un déplacement télescopique, alternatif, à l'intérieur de ladite ouverture centrale (32) dudit manchon de démoulage de moule.

5. Procédé selon l'une quelconque des revendications précédentes, dans lequel, la partie de moule antérieure comporte en outre une paroi s'étendant depuis le bord périphérique, ladite paroi ayant des surfaces interne et externe, et ladite première force est appliquée contre la surface interne de ladite paroi de ladite partie de moule antérieure.

6. Utilisation d'un appareil selon le procédé de la revendication 1, ledit appareil comprenant :
un manchon (30) de démoulage de moule ayant une surface (30') de mise en prise de moule annulaire définissant une ouverture centrale (32), ladite surface de mise en prise de moule annulaire étant capable d'appliquer une première force contre ladite surface non optique de ladite partie de moule au niveau d'un emplacement radialement vers l'extérieur dudit centre de ladite surface non optique, ladite première force étant suffisante pour démouler au moins le bord périphérique de la surface antérieure de la lentille depuis la surface optique concave de la partie de moule antérieure.

7. Utilisation, selon la revendication 6, dudit appareil, comprenant en outre :
une goupille de démoulage de moule, ladite goupille de démoulage de moule montée pour un déplacement télescopique, alternatif, à l'intérieur de ladite ouverture centrale dudit manchon de démoulage de moule, ladite goupille de démoulage de moule étant capable d'appliquer une seconde force contre ladite surface non optique de ladite partie de moule antérieure au niveau d'un emplacement adjacent au centre dudit centre de surface non optique, ladite force étant suffisante pour démouler le centre de la surface antérieure de ladite lentille depuis la partie de moule antérieure moyennant quoi il est possible de récupérer la lentille depuis la partie de moule antérieure pour une autre manipulation.
